# EUROPEAN PATENT SPECIFICATION

(11) **EP 1 487 936 B1**
(45) Date of publication and mention of the grant of the patent: **06.09.2006**
(21) Application number: 02717000.0
(22) Date of filing: 26.03.2002
(51) Int. Cl.: C09K 11/06, C09K 19/16, G11B 7/24, C09D 11/00

(54) **NON-VISUALIZED PERMANENT INFORMATION RECORDING SUBSTRATE FOR USE AS SECURITY LABEL FOR AUTHENTICATION**
UNSICHTBARES PERMANENTES SUBSTRAT ZUR INFORMATIONSAUFZEICHUNG ZUR VERWENDUNG ALS SICHERHEITSETIKETT ZUR AUTHENTIFIZIERUNG
SUBSTRAT PORTEUR D'INFORMATIONS PERMANENTES NON VISIBLES DESTINE A ETRE UTILISE COMME ETIQUETTE DE SECURITE A DES FINS D'AUTHENTIFICATION

(43) Date of publication of application: 22.12.2004
(73) Proprietor: COUNCIL OF SCIENTIFIC & INDUSTRIAL RESEARCH, New Delhi 110001 (IN)
(72) Inventor: Das, Suresh, Kerala 695 019 (IN); Davis, Riju, Kerala 695 019 (IN)
(74) Representative: Frith, Richard William
(86) International application number: PCT/IB2002/001152
(87) International publication number: WO 2003/080759

(56) References cited:
- EP-A- 0 182 236
- EP-A- 0 594 538
- EP-A- 0 658 341
- EP-A- 0 864 631
- DD-A- 234 666
- US-A- 4 186 020
- US-A- 4 963 448
- US-A- 5 480 749
- US-A- 5 629 920
- DATABASE WPI Section Ch, Week 199743 Derwent Publications Ltd., London, GB; Class A89, AN 1997-461724 XP002220879 & JP 09 211779 A (FUJI XEROX CO LTD), 15 August 1997 (1997-08-15)
- PATENT ABSTRACTS OF JAPAN vol. 1997, no. 05, 30 May 1997 (1997-05-30) & JP 09 020860 A (TEIJIN CHEM LTD), 21 January 1997 (1997-01-21)
- DATABASE WPI Section Ch, Week 199610 Derwent Publications Ltd., London, GB; Class A89, AN 1996-093311 XP002220880 & JP 08 002097 A (HITACHI LTD), 9 January 1996 (1996-01-09)
- PATENT ABSTRACTS OF JAPAN vol. 2002, no. 04, 4 August 2002 (2002-08-04) & JP 2001 348502 A (NIPPON KAGAKU KOGYOSHO:KK), 18 December 2001 (2001-12-18)
- PATENT ABSTRACTS OF JAPAN vol. 015, no. 332 (C-0861), 23 August 1991 (1991-08-23) & JP 03 127767 A (MITSUBISHI PETROCHEM CO LTD;OTHERS: 02), 30 May 1991 (1991-05-30)
- PAPPER V; PINES D; LICKHTENSHTEIN G; PINES E: "Photophysical characterization of trans-4,4'-disubstituted stilbenes" JOURNAL OF PHOTOCHEMISTRY AND PHOTOBIOLOGY A: CHEMISTRY , vol. 111, 1997, pages 87-96, XP002220878
- PATENT ABSTRACTS OF JAPAN vol. 014, no. 543 (C-0783), 30 November 1990 (1990-11-30) & JP 02 229142 A (MITSUBISHI PETROCHEM CO LTD;OTHERS: 03), 11 September 1990 (1990-09-11)
- PATENT ABSTRACTS OF JAPAN vol. 014, no. 543 (C-0783), 30 November 1990 (1990-11-30) & JP 02 229136 A (MITSUBISHI PETROCHEM CO LTD;OTHERS: 02), 11 September 1990 (1990-09-11)
- PATENT ABSTRACTS OF JAPAN vol. 1998, no. 10, 31 August 1998 (1998-08-31) & JP 10 142730 A (HITACHI LTD), 29 May 1998 (1998-05-29)

## Description

### Technical Field

The present invention relates to an information carrying substrate capable of being applied to a surface for authenticating said surface, and more particularly, the present invention relates to an information carrying substrate capable of being affixed to a document or a product for authenticating the document or the product. The present invention also relates to method for authenticating a product.

### Background of the Invention

Counterfeiting of currencies, consumer goods, documents and a host of important articles have become a major menace and threat to civilized social life. These arc just unethical advantages derived of otherwise splendid inventions made world over, such as high-resolution color printers, digital reprographics and other hi-tech duplicating machines and methods.

Although eradication of such unethical practices is not easily possible, there could be efficient methods to prevent and check such acts. Till date there have been several attempts to achieve security coding on products and this has been a challenging job for most companies and governmental organizations. Several methods that have been assimilated are holograms, watermarks, microreplicated patterns, special inks, fluorescent pigments, magnetic materials, mixtures of fluorescent materials etc.

Several of these strategies have posed disadvantages in various aspects and proportions, for example, the method of using a diffraction phenomenon such as a hologram has a problem in that the cost is difficult to be reduced, because a mark must be formed on the original. The method, in which the magnetic material is applied, involves a necessity of bringing the original into contact with the magnetic head in a hermetic manner. Therefore, a problem arises in this case that the apparatus structure becomes too complicated. The method using photochromism suffers a problem in that most photochromic compounds are unstable. The image recognition method must use a great quantity of data to recognize all the various original documents to be protected, resulting in heavy apparatus load and difficulty in cutting the cost. Security ink ribbons currently available arc either too costly or lose their security features before the inked fabric reaches its visual end of life.

Various methods of providing documents, such as negotiable instruments, with tamper evident systems to prevent alteration have been proposed. Likewise, systems have also been developed to prevent reproduction of documents by photocopying to reduce the incidence of fraud. However, in recent years advanced color copiers, which are readily accessible to the general public, can produce nearly exact duplicates of the original document. It is very difficult for the untrained person to distinguish the original from an illicit reproduction. To prevent passing off of the reproduction as the original, efforts have been made to make the original document incapable of being copied or to incorporate authenticating systems into the document. One known method of producing a paper that is useful for preventing fraud in security documents is to print the paper with a chemical in the form of an invisible image. When a bleach solution or an ink eradicator is applied over the area of the invisible image, a colored image appears to confirm its authenticity. However, this method is often undesirable because the bleach solution is corrosive, the ink eradicator contains toxic solvents, and the solution tends to warp or otherwise permanently damage the document. Another method is to print a document with fluorescent ink, which is colorless under visible light, but becomes discernible when exposed to ultra-violet light. Similarly, fluorescent ink may be printed on a document for automatic identification by an electronic scanner such as that disclosed in an U.S. Pat. No. 4,186,020 to Wachtel. The use of fluorescent ink requires access to a source of ultraviolet light or a document verifying electronic scanner. This prevents quick and easy verification of the document. A further prior method is disclosed in another U.S. Pat. No. 4,183,989 to Tooth in which security paper is provided with a strip, thread or planchette having at least two machine verifiable security features, one of which is a magnetic material and a second of which is a luminescent material, an X-ray absorbent or a metal. Since most security documents are printed paper products with different base weight, color and texture requirements, the availability of various papers having these security features is very limited. This system also has the disadvantage of requiring specialized and expensive verifying machines to examine the documents and determine its authenticity. An U.S. Pat. No. 4,726,608 to Walton discloses the use of an opaque coating over authenticating indicia. The image of the indicia is later made visible by scratching off the opaque coating or by applying a solvent to disperse the coating. This system further has the disadvantage of either requiring solvents or producing unwanted dust. Still another method identifying forgeries is by micro-printing where a message, logo, or name is printed in very small type as a border around the face of the document. Generally, the message cannot be read by the naked eye, and requires some magnification to make it legible. Copiers cannot duplicate the micro-printing with sufficiently high resolution, so that on a copy the words become Just a broken line or blur. However, the tellers at a bank or persons accepting the document generally do not have access to magnifiers and thus, a copy will not be easily noticeable. "Sunburst" or "Rainbow" printing is sometimes used to help defeat color copiers in which the document is printed with one intense color at one side of the document which slowly fades into another color across the width of the paper. Eventually the second color intensifies at the opposite side. This is a visual system that is difficult to duplicate on a copier. If the original printing is not available for comparison, it is extremely difficult for the untrained eye to know whether it is a copy or authentic. Another method is disclosed in an U.S. Pat. No. 4,210,346 to Mowry Jr. et al. in which "VOID" or other warning messages is preprinted in halftone or multitonc on the document to camouflage the pre-printing. These pre-printed messages arc blended into the surroundings of the document so that human eye sees them as a uniform printing. The pre-printed "VOID" or warning messages will appear on the illegal copy by many color copiers. However, more sophisticated color copiers have been developed in recent years so that a skillful lawbreaker can now reproduce a security document without the preprinted warning messages appearing on the copies. Another method of reducing the risk of fraud is to incorporate a color forming substance into the substrate of the document. To verify the authenticity of a document, a second color forming substance, which is capable of taking part in a color-forming reaction, is applied to the security document to reveal the hidden images or produce color changes. Examples of this form of detection system are disclosed in the U.S. Pat. Nos. 4,037,007 to Wood and 4,360,548 to Skees et al. However, the second color forming substance is not generally available at every location where the security documents are handled or whenever it is needed. Thus, these documents can not be readily tested for their authenticity. The above noted security and authentication systems have not entirely prevented unauthorized or fraudulent reproduction of documents. Accordingly, a need still exists for a simple and efficient system, which is able to accurately authenticate a document and distinguish it from a reproduction.

Photochromism, a useful and simple technique, has been extensively employed in the fields of optical memories and imaging. However, most attempts adopting this phenomenon have confronted with a basic material drawback that the created images are destroyed by photoreactions during the "read" process. The wavelength of light used in the various stages of photoinduced imaging, such as "write", "read" and "erase", are usually the same or fall in the region where the different forms of the photochromic molecule absorb. Hence, repetitive "read" process even with low intensity light induces the same reaction as "writing" or "erasing" thus causing destruction of created images. Tamaoki *et al.* have improved upon this strategy with azobenzene derived photochromic molecules, whose photoisomerization process showed a dependence on the intensity of photolysing light. This makes the system more efficient, as the "write" process requires a high intensity light whereas the "read" process requires only low intensity light thereby protecting the created images. However, the "read" process with these materials required an additional fluorescent film for viewing the photoinduced impressions since the photochromic material by itself is not fluorescent. It would be ideal to have inherently fluorescent systems wherein the fluorescence can be destroyed during the "write" process using light of high intensity. This would permit the "read" process to be carried out with no external aid other than exposure to a low intensity ultraviolet light whereby the image will become clear to the naked eye, without resulting in blurring or erasure of the written image.

Fluorescent labels as a technique for security coding and anti-counterfeit labeling arc widely used due to the case and reliability of the method. Although several reports and patents focus on this theme, a need still exists for a simple, cost-effective, efficient, and reliable system which is able to accurately authenticate a document and distinguish it from its spurious version. In most fluorescent labels the authentication procedure needs sophisticated instrumentation to detect and verify the authenticity of the secret imaging or coding. Also the resolution of the image would be limited, since in most cases of imaging using fluorescent materials, these are deposited on a substrate in a required pattern or shape. This method however has a limitation to its resolution and will also be reproducible using several techniques. A methodology using light for writing the image or information provides a high resolution and an additional tamper-proof feature to the label. We report fluorescent labeling materials and methods of imaging them with light resulting in recording of permanent and invisible information which can be easily read using handy ultraviolet lamps. Such labels can bear images with high resolution as it involves light induced writing.

The use of fluorescent labels for security coding and anti-counterfeit labeling is of interest due to the ease and reliability of the method. Although several reports and patents focus on this theme, a need still exists for a simple, cost-effective, efficient, and reliable system which is able to accurately authenticate a document and distinguish it from its spurious version.

An earlier patent (U. S. Patent No.patent 4186020) has described the use of ink containing a fluorescent compound, which is printed in a predetermined pattern. Here the ink is printed on a predetermined pattern on a portion of a label and a protective layer is applied over it. The predetermined pattern is either in the form of a bar code or a readily identifiable design. Such techniques have a drawback that the labels can be easily tampered with since the image is printed onto the label at the final stage.

Another method involving the use of photoluminescent materials for authentication purposes is described in US Pat. No. 6165609. This patent describes a method of incorporating a taggant compound in a film forming material. The taggant molecule is generally invisible to the naked eye and on irradiation with UV light, the taggant molecule emits light of a different wavelength. Authentication is then carried out by comparing the emitted wavelength with the wavelength of light known to be emitted by the taggant molecule. The light emitted by the taggant is determined by a detector capable of determining the wavelength of light emitted and compared with the expected wavelength of emission.

A more recent patent (U.S. Patent No. 6297508) has described an improved version of this patent in which more than one taggant compound is used in the label. Thus the fluorescent spectrum emitted by such a label will be complex depending upon the nature of the taggant molecules as well as the proportion of the two molecules in the label. Such a mixed taggant label will be more difficult to replicate than labels containing a single taggant material.

JP 09 211779A discloses an image recording medium having a photochromic layer comprising a polymer resin matrix and a photochromic material, such as a stilbene type dye, contained in the matrix. Suitably, the recorded information on the medium is stable against exposure to light at room temperature, while raising the temperature above the glass transition temperature of the medium permits erasing and recording of an image which may be performed repeatedly.

JP 09 020860A discloses a face luminescent aromatic polycarbonate resin composition for liquid crystal displays.

JP 08 002097A discloses a recording medium for picture image-forming equipment. The recording medium includes a photoactive layer consisting of an organic compound, for example stilbene, a holder, a silane coupling agent and an incidentally mixed compound.

US 4,963,448 discloses a photorecording element consisting of a transparent substrate, a molecular layer of an organic compound with an ability to change structure reversibly by virtue of light and disposed in direct contact with the transparent substrate, and a layer of liquid crystals disposed in direct contact with the molecular layer.

US 5,629,920 discloses an information recording system including a photoelectric sensor having a semiconductive, photoconductive layer stacked on an electrode, and an information recording medium having an information recording layer stacked on an electrode so that information may be recorded on the information recording layer by an electric field or electric charge.

JP 2001 1348502A discloses 4,4'-di(benzoxazole-2-yl) stilbene derivatives useful as fluorescent whiteners.

EP-A-0182236 discloses an optical recording medium comprising an information recording layer containing an organic material such as a dye, a dye-polymer complex, a photosensitive polymer, a photosensitive diazo compound and a photochromic dye.

JP 03 127767A discloses benzylcyanamide derivatives having photochemical properties.

A problem with the simple use of fluorescent taggant molecules in labels is that once the counterfeiter is aware of the photoluminescer or the combination of the photoluminescers then reproduction of the labels becomes fairly simple. Also photodetectors are required for authenticating the emitted wavelength from such fluorescent labels.

In view of these limitations, incorporation of additional features into fluorescent labels which would make reproduction of the labels even more difficult is desirable. In this patent we describe the use of fluorescent materials as labels onto which different images can be patterned using light of a specific wavelength and intensity. Thus it would be possible for light of specific intensity and wavelength to make desired markings on the labels using suitable masks thus providing an added security feature compared to the fluorescent labels described in earlier patents. The fluorescent materials used in these labels have been specially selected such that irradiation of the labels with light of specific wavelengths and intensity can result in loss of fluorescence in the irradiated portions.

### Objects of the Invention:

The main object of the present invention is to provide a new information carrying substrate capable of being applied to a surface for authenticating said surface.

Another object of the present invention is to provide a method for writing authenticating information or a forming an authenticating image upon the information-carrying substrate.

Still another object of the present invention is to provide a method for authenticating a product using said substrate.

### Detailed Description of the Present Invention:

Accordingly, the present invention provides an information carrying substrate applicable to a surface of a product for authenticating the product as claimed in claim 1.

In an embodiment of the present invention, said photo-switchable fluorescent compound possess strong solid state fluorescence.

In another embodiment of the present invention, said photo-switchable fluorescent compound is capable of being switched thermally and photo-chemically.

In a further embodiment of the present invention, the film forming material is selected from the group comprising of polymethylmethacrylate, polystyrene and polyvinylalcohol or mixtures thereof.

In one more embodiment of the present invention, the film forming material and the photo-switchable fluorescent compound are soluble in a solvent selected from the group consisting of acetone, chloroform, ethylacetate, dichloromethane and methanol.

In one another embodiment of the present invention, the substrate is applied on surfaces selected from the group comprising of metal, plastic, glass, polymer sheets or any other surface which is not damaged or is soluble in the solvent used.

In an embodiment of the present invention, the information carrying substrate is non-fluorescent in ordinary light but turns fluorescence when kept under low intensity UV light source.

In another embodiment of the present invention, the fluorescence of the substrate in low intensity UV radiation is irreversible switched OFF when the substrate is subjected to high intensity UV source.

In yet another embodiment of the present invention, the information is recorded on the substrate by placing an information containing mask in front of the coated substrate and irradiating with a high intensity UV source.

In still another embodiment of the present invention, the UV light source emits light having amplitude above 2mJ/Pulse.

The present invention further provides a method for authenticating a product as claimed in claim 1.

In an embodiment of the present invention, said photo-switchable fluorescent compound possess strong solid state fluorescence and is capable of being switched thermally and photo-chemically.

In a further embodiment of the present invention, the film forming material is selected from the group comprising of polymethylmethacrylate, polystyrene and polyvinylalcohol or mixtures thereof.

In one more embodiment of the present invention, the film forming material and the photo-switchable fluorescent compound are soluble in a solvent selected from the group consisting of acetone, chloroform, ethylacetate, dichloromethane and methanol.

In another embodiment of the present invention, the substrate is applied on surfaces selected from the group comprising of metal, plastic, glass, polymer sheets or any other surface which is not damaged or is soluble in the solvent used.

In an embodiment of the present invention, the information carrying substrate is non-fluorescent in ordinary light but turns fluorescence when kept under low intensity UV light source.

In another embodiment of the present invention, the fluorescence of the information carrying substrate in low intensity UV radiation is irreversible switched OFF when the substrate is subjected to high intensity UV source.

In yet another embodiment of the present invention, the information is recorded on the substrate by placing an information containing mask in front of the substrate and irradiating with a high intensity UV source whose amplitude is above 2 mJ/Pulse.

In a further embodiment of the present invention, the information written on the substrate is read by subjecting the information carrying medium to a UV light source having very low amplitude.

In the present application a very efficient fluorescence imaging material, with permanent and secret writing properties, based on fluorescent compounds dispersed in a polymer film is provided. The photoreactions of these compounds, when dispersed in a polymer film were found to be dependent on the intensity of the photolysing light. Whereas high intensity ultraviolet light caused the photoreactions of these compounds, the process was not observed using low intensity ultraviolet light. The high intensity light formed nonfluorescent marks on the fluorescent polymer film. The polymer film before and after photolysis appeared transparent under normal light (room light) whereas in the presence of low intensity UV radiation the image created was clearly visible and remained unaltered even on prolonged exposure ( > 3 hours).

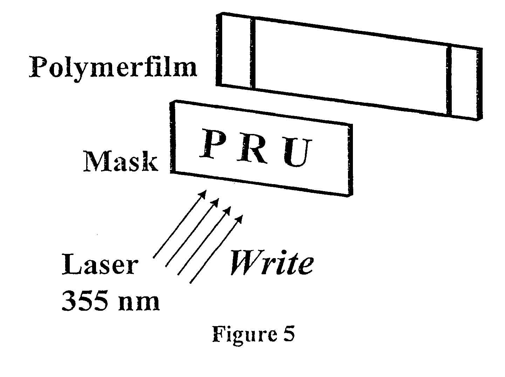

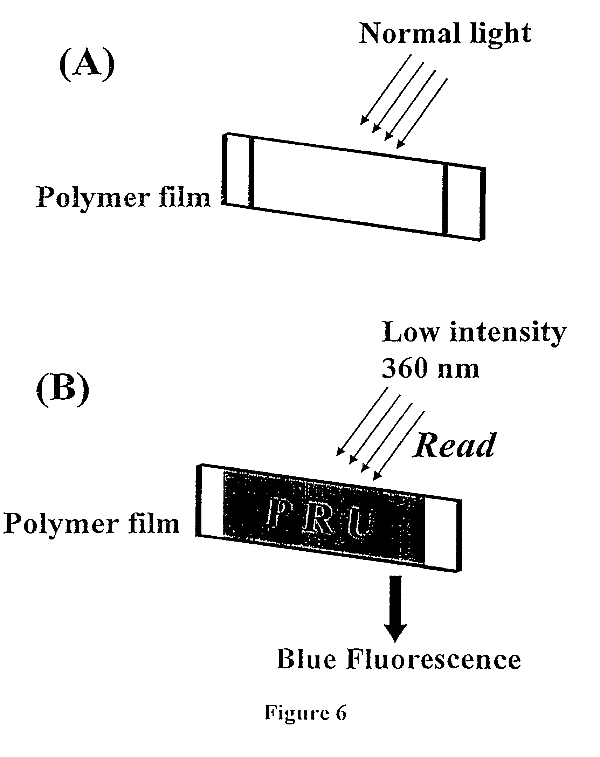

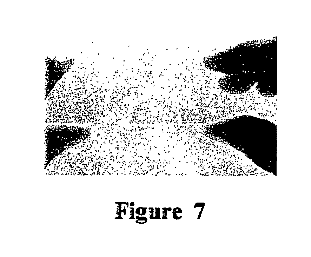

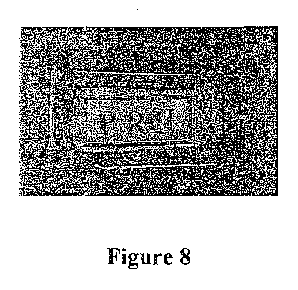

Polymer films with the fluorescent compounds dispersed in it were obtained by spreading a viscous solution, obtained by dissolving the required polymers and the fluorescent molecule in a suitable solvent, over a suitable substrate by spin coating. Photomasks lor imaging were obtained by printing the required images, on transparent polymer sheets, using a laser printer. An imaging sample cell set up consisted of a polymer film coated on the substrate above which the photomask was placed. High intensity ultraviolet light was used as the light source for the "write" process (Schematically shown in Figure 5). After the imaging is completed the polymer film looks unaltered in room light (Schematically shown in Figures 6A and 7). Under low intensity UV light the image created becomes clearly visible (Schematically shown in Figures 6B and 8). The low intensity UV light used for the "read" process did not cause any damage or erasure of the recorded image. In other words it is not possible to write on such a polymer film using low intensity UV radiation. The photoprocesses of the fluorescent compound that take place upon irradiation with high intensity light are thermally irreversible, making the image a permanent one. The fluorescent lamp used for reading the information contains wavelength of light used for the writing process. However since the photochemical process required for switching off the fluorescence occurs only with high intensity UV light, the reading process which involves use of low intensity UV light does not result in further writing. Thereby the image retains its clarity even on extended exposure to the low intensity UV light. No fading or blurring of the image was observed. The major advantage of this system is that there is a threshold energy for the writing process below which the photoprocess does not occur.

It may be highlighted that the secret coding made possible by these materials may be incorporated into currency notes with the image of its denomination or an emblem to mark its authenticity. To cite another useful application of such imaging, it may be incorporated into passports issued where the name of the passport holder may be imaged into the film. The film may then be placed between to two well-pasted plain papers. The image would still be clear under UV radiation. When each passport bears the name of its holder as a permanent marking, the case of forgery is restricted substantially. Any serious attempts to alter the name inscribed would only damage the material. Currently in the passports issued there is no such secret name inscription, which may be a good reason to several cases of passport forgery. Inscription of such imaging on any object would make it a near fool proof and full proof to its authenticity. The application of such imaging in textile shops, supermarkets and on consumer products could be similarly envisaged. A useful incorporation of such labels would be in valuable documents such as certificates, where forgery is prevented on trying to duplicate the certificates even on using the best copiers available.

### Included Structures in the Invention

1. #STR1# represents 4-cyano, 4 -mcthoxy-1,4-diphenylbutadiene
2. #STR2# represents 4-cyano, 4 -butyloxy-1,4-diphenylbutadiene
3. #STR3# represents 4-cyano, 4 -octyloxy-1,4-diphcnylbutadiene
4. #STR4# represents 4-cyano, 4 -dodccyloxy-1,4-diphenylbutadiene
5. #STR5# represents 4-cyano, 4 methoxystilbene
6. #STR6# represents 4-cyano, 4 butyloxystilbene
7. #STR7# represents 4-cyano, 4 -octyloxystilbene
8. #STR8# represents 4-cyano, 4 -dodecyloxystilbene
9. #STR9# represents 2-[3-(4-N,N-dimethylaminophenyl)prop-2-enylidene]indane-1,3-dione

### Brief description of the Figures

**Figure 1:** Solid state fluorescence spectrum of compound of #STR1#
**Figure 2:** Solid state fluorescence spectrum of compound of #STR2#
**Figure 3:** Solid state fluorescence spectrum of compound of #STR3#
**Figure 4:** Solid state fluorescence spectrum of compound of #STR4#
**Figure 5:** Schematic representation of the "write" process for imaging on the polymer films.
**Figure 6(A):** Schematic representation of the "read" process under normal light.
**Figure 6(B):** Schematic representation of "read" process under low intensity ultraviolet (UV) light
**Figure 7:** Photograph of the polymer film held under normal light
**Figure 8:** Photograph of the polymer film, with inscription PRU, exposed to low intensity UV light
**Figure 9:** Photograph of the polymer film with inscription PRU, using a negative photomask, on a polymer film exposed to low intensity UV light
**Figure 10:** Shows the chemical transformation of the compounds taking place during the process of writing.

### Example 1:

### Synthesis of #STR1#, #STR2#, #STR3# and #STR4#

#STR1#, #STR2#, #STR3# and #STR4# were prepared by Wittig reaction between freshly prepared 4-alkyloxycinnamaldehyde and 4-(methylene-triethylphosphonium-bromide)-cyanobenzene. The crude product was purified using column chromatography over silica gel (100 - 200) and a mixture (1:99) of ethyl acetate and hexane as the eluent. The compound was further purified by re-crystallization using a mixture of ethyl acetate and hexane.

**Characteristics of #STR1# thus obtained are given below:**
Yield: 40%; melting point: 175 °C; UV-Vis (MeCN): λmax, 356 nm (ε, 44000 mol⁻¹ cm⁻¹); IR (KBr) υ max: 2926, 2857, 2356, 2230, 1735, 1680, 1603, 1511, 1475, 1306, 1258, 1176, 1027, 984, 857, 800 cm⁻¹; ¹H NMR (CDCl₃,00 MHz): δ 3.85 (3H, s, OCH₃), 6.60-6.63 (1H, dd, ³*J*_{c,d} = 15.38 Hz, olefinic), 6.72-6.75 (1H, dd, ³*J*_{a,b} = 15.38 Hz, olefinic), 6.82-6.88 (1H, dd, ³*J*_{a,b} =15.38 Hz, ³*J*_{b,c} =10.25 Hz, olefinic), 6.90-6.92 (2H, d, ³*J*_{1,2}= 8.3 Hz, aromatic), 7.02-7.08 (1H, dd, ³*J*_{c,d} = 15.38, ³*J*_{b,c} = 10.25 Hz, olefinic), 7.41-7.43 (2H, d, ³***J***_{1,2}= 8.3 Hz, aromatic), 7.49-7.51 (2H, d, ³*J*_{3,4} = 8.1 Hz, aromatic), 7.60-7.62 (2H, d, ³*J*_{3,4} = 8.1 Hz, aromatic).

**Characteristics of #2# thus obtained are given below:**
¹H NMR (CDCl₃, 300 MHz): δ 0.85-0.88 (3H, t, *CH*₃-), 1.26-1.45 (2H, m, *CH*_{*2*}*)*, 1.73-1.80 (2H, m, CH₂CH₂O), 3.94-3.99 (2H, t, OC*H*₂), 6.55-6.61 (1H, dd, ³*J*_{c,d} = 15.38 Hz, olefinic), 6.68-6.73 (1H, dd, ³***J***_{a,b}=15.38Hz, olefinic), 6.78-6.86 (1H, dd, ³***J***_{a,b}=15.38Hz, ³***J*** _{b,c} = 10.25 Hz, olefinic), 6.86-6.88 (2H, d, ^{*3*}*j* _{1,2} = 8.3 Hz, aromatic), 6.99-7.07 (1H, dd, ³***J***_{c,d} = 15.38, ³*J*_{b,c} = 10.25 Hz, olefinic), 7.37-7.39 (2H, d, ³*J*_{1,2}= 8.3 Hz, aromatic), 7.46-7.50 (2H, d, ³*J*_{3,4} = 8.1 Hz, aromatic), 7.57-7.60 (2H, d, ³***J***_{*3,4*} = 8.1 Hz, aromatic).

**Characteristics of #STR3# thus obtained are given below:**
¹H NMR (CDCl₃, 300 MHz): δ 0.85-0.88 (3H, t, *CH*₃-), 1.26-1.45 (10H, m, (C*H*₂)₅), 1.73-1.80 (2H, m, CH₂CH₂O), 3.94-3.99 (2H, t, OCH₂), 6.55-6.61 (1H, dd, ³***J***_{c,d} = 15.38 Hz, olefinic), 6.68-6.73 (1H, dd, ³***J***_{a,b}=15.38 Hz, olefinic), 6.78-6.86(1H, dd, ³***J***_{a,b}=15.38 Hz, ³*J* _{b,c} = 10.25 Hz, olefinic), 6.86-6.88 (2H, d, ^{*3*}***J***_{1,2}=8.3 Hz, aromatic), 6.99-7.07 (1H, dd, ³*J*_{c,d} = 15.38, ³*J*_{b,c} = 10.25 Hz, olefinic), 7.37-7.39 (2H, d, ³*J*_{1,2}= 8.3 Hz, aromatic), 7.46-7.50 (2H, d, ³*J*_{3,4} = 8.1 Hz, aromatic), 7.57-7.60 (2H, d, ³*J*_{3,4} = 8.1 Hz, aromatic).

**Characteristics of #STR4# thus prepared is given below:**
Yield: 40%; melting point: K(crystal) 96.9° C N (Nematic Liquid crystalline phase) 171.9° C I(isotropic phase);UV-Vis (MeCN): λmax, 356 nm (ε, 44000 mol⁻¹ cm⁻¹); 1R (KBr) ν max: 2926, 2857, 2356, 2230, 1735, 1680, 1603, 1511, 1475, 1306, 1258, 1176, 1027, 984, 857, 800 cm⁻¹; ¹H NMR (CDCl₃, 300 MHz): δ 0.85-0.88 (3M, t, C*H*₃-), 1.26-1.45 (18H, m, (C*H*₂)₉), 1.73-1.80 (2H, m, C*H*₂CH₂O), 3.94-3.99 (2H, t, OC*H*₂), 6.55-6.61 (1H, dd, ³*J*_{c,d} = 15.38 Hz, olefinic), 6.68-6.73 (1H, dd, ³***J***_{a,b} =15.38 Hz, olefinic), 6.78-6.86 (1H, dd, ³***J***_{a,b}= 15.38 Hz, ³*J*_{b,c} =10.25 Hz, olefinic), 6.86-6.88 (2H, d, ³*J*_{1,2}= 8.3 Hz, aromatic), 6.99-7.07 (1H, dd, ³*J*_{c,d} = 15.38, ³*J*_{b,c} = 10.25 Hz, olefinic), 7.37-7.39 (2H, d, ³***J***_{1,2} = 8.3 Hz, aromatic), 7.46-7.50 (2H, d, ³***J***_{3,4} = 8.1 Hz, aromatic), 7.57-7.60 (2H, d, ³*J*_{3,4} = 8.1 Hz, aromatic).

### Example 2:

### Synthesis of #STR5#, #STR6#, #STR7# and #STR8#

#STR5#, #STR6#, #STR7# and #STR8# were synthesized by Wittig reaction between freshly prepared 4-alkyloxybenzaldehyde with 4-(methylene-triethylphosphonium-bromide)-cyanobenzcne. The crude product was purified using column chromatography over silica gel (100 - 200) and a mixture (1:99) of ethyl acetate and hexane as the eluent. The compound was further purified by re-crystallization using a mixture of ethyl acetate and hexane.

**Characteristics of#STR5# thus obtained are given below:**
¹H NMR (CDCl₃, 300 MHz): δ 3.85 (3H, s, OCH₃), 6.82-6.84 (2H, d, ³***J***_{c,d} = 8.3 Hz, aromatic), 6.84-6.89 (1H, d, ³*J*_{a,b} =16.27 Hz, olefinic), 7.06-7.12 (1H, d, ³***J***_{a,b}=16.27 Hz, olefinic), 7.37-7.40 (2H, d, aromatic), 7.45-7.48 (1H, d, aromatic), 7.52-7.55 (2H, d, ³***J***_{1,2}=8.3 Hz, aromatic).

**Characteristics of#STR6# thus obtained given below:**
¹H NMR (CDCl₃ 300 MHz): δ 0.89-0.93 (3H, t, CH₃-), 1.39-1.46 (2H, m, C*H*₂), 1.66-1.75 (2H, m, C*H*₂CH₂O), 3.90-3.94 (2H, t, OCH₂), 6.82-6.84 (2H, d, ³***J***_{c,d}=8.3 Hz, aromatic), 6.84-6.89 (1H, d, ³***J***_{a,b} = 16.27 Hz, olefmic), 7.06-7.12 (1H, d, ³***J***_{a,b} =16.27 Hz, olefinic), 7.37-7.40 (2H, d, aromatic), 7.45-7.48 (1H, d, aromatic), 7.52-7.55 (2H, d, ³***J***_{1,2}= 8.3 Hz, aromatic).

**Characteristics of#STR7# thus obtained given below:**
¹H NMR (CDCl₃, 300 MHz): δ 0.85-0.88 (3H, t, CH₃-), 1.26-1.45 (10H, m, (C*H*₂)₅), 1.73-1.80 (2H, m, CH₂CH₂O 3.94-3.99 (2H, t, O C*H*₂), 6.82-6.84 (2H, d, ³***J***_{c,d} = 8.3 Hz, aromatic), 6.84-6.89 (1H, d, ³***J***_{a,b} =16.27 Hz, olefinic), 7.06-7.12 (1H, d, ³***J***_{a,b} = 16.27 Hz, olefinic), 7.37-7.40 (2H, d, aromatic), 7.45-7.48 (1H, d, aromatic), 7.52-7.55 (2H, d, ³***J***_{*1,2*}= 8.3 Hz, aromatic).

**Characteristics of#STR8# thus obtained given below:**
¹H NMR (CDCl₃, 300 MHz): δ 0.85-0.88 (3H, t, C*H*₃-), 1.26-1.45 (18H, m, (C*H*₂)₉), 1.73-1.80 (2H, m, C*H*₂CH₂O), 3.94-3.99 (2H, t, *OCH*_{*2*}*),* 6.82-6.84 (2H, d, ³*J*_{c,d} = 8.3 Hz, aromatic), 6.84-6.89 (1H, d, ³***J***_{a,b} = 16.27 Hz, olefmic), 7.06-7.12 (1H, d, ³***J***_{a,b} = 16.27 Hz, olefinic), 7.37-7.40 (2H, d, aromatic), 7.45-7.48 (1H, d, aromatic), 7.52-7.55 (2H, d, ³***J***_{1,2}= 8.3 Hz, aromatic).

### Example 3:

### Synthesis of #STR9#

To a solution of 1,3-indanedione in 1,4-dioxane, 2 to 3 drops of triethylamine were added. To the above mixture equimolar amount of dimethylaminobenzaldehyde was added and the mixture was stirred at room temperature (30° C) for 5 hrs. The reaction mixture was poured into cold water and filtered out the crude product.

The compound was purified through chromatography over silica gel (100-200 mesh) using a mixture (1:4) of ethyl acetate and hexane as the eluent. Re-crystallization from a mixture (4:1) of ethyl acetate and hexane gave compound in the form of deep red crystals.

**Characteristics of #STR9# thus obtained are given below:**
Yeild (70%): melting point: 250-251 °C; ¹H NMR (CDCl₃) δ 3.18 (6H, s, NMe₂), 6.69-6.71(1H, d, vinylic), 7.59-7.62(1H, d, vinylic), 7.63-7.9(8H, m, aromatic), 8.23-8.32(1H,dd, vinylic).

### Example 4:

#STR1#, #STR2#, #STR3#, #STR4#, #STR5#, #STR6#, #STR7# and #STR8# exhibit liquid crystalline nature with wide temperature ranges. The liquid crystalline phases of these derivatives can be photochemically switched from smectic/nematic to isotropic state and back.

**Table 1: Phase transition temperatures and thermodynamic parameters of #STR1#, #STR2#, #STR3# and #STR4#**

| **Compound** | **Phase transition temperatures (°C)**^{**[i]**} | **ΔH (kJmol**^{**-1**}**)** | **ΔS (JK**^{**-1**}**mol**^{**-1**}**)** |
|---|---|---|---|
| #STR1# | K 175.3 N 213 I | 21.1(K-N) | 47.0 (K-N) |
| #STR2# | K 145.5 N 209.1 I | 25.8,0.4 | 85.1, 0.9 |
| #STR3# | K 105.3 S 159.6 N 186.6 I | 36.2, 0.4 (N-I) | 95.7, 0.9 (N-I) |
| #STR4# | K 96.9 S 171.9 I | 46.2,3.2 | 124.7, 7.6 |

| | | | |
|---|---|---|---|
| **[i] K = crystalline, N = nematic, S = smectic A and I = isotropic** | | | |

### Example 5:

#STR1#, #STR2#, #STR3# and #STR4# exhibit liquid crystalline phases that can be switched on and off photochemically. For example, #STR4# shows the following phase transition temperatures, crystalline to smectic A at 96.9° C and smectic A to isotropic at 171.9° C. At 120° C where #STR4# shows a clear smectic A phase the sample was irradiated using 360 nm light from a high-pressure mercury lamp equipped with an Oriel 360 nm band pass filter. The smectic A phase transformed isothermally into an isotropic state. The material was no longer liquid crystalline at any temperature and the light induced change was found to be thermally irreversible. The phase transition temperatures of the new mixture is crystalline to isotropic at 80° C. The smectic A phase could be regenerated upon irradiation of the above mixture using 266 nm laser (fourth harmonic of Quanta Ray OCR-12 Nd:YAG laser, 10 ns pulse width and energy 15 mJ). The 266 nm laser irradiation was carried out after cooling the isotropic mixture to room temperature.

### Example 6:

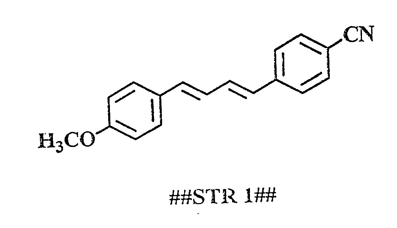

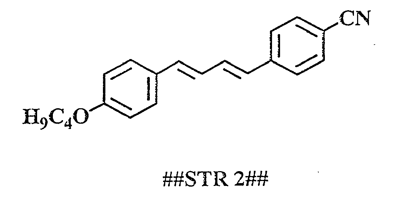

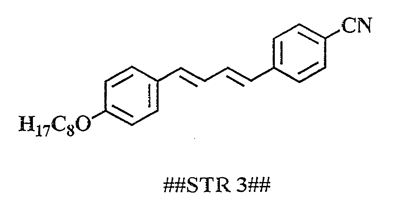

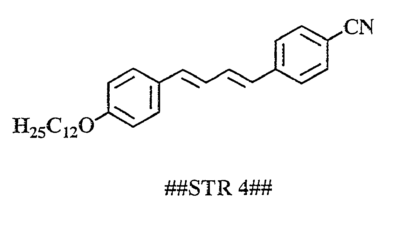

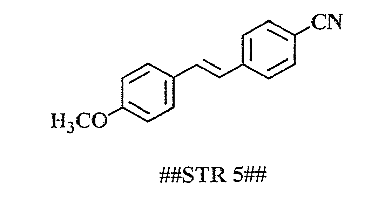

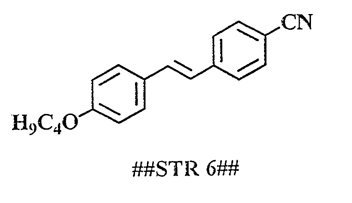

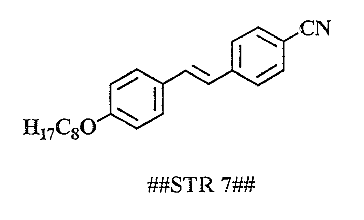

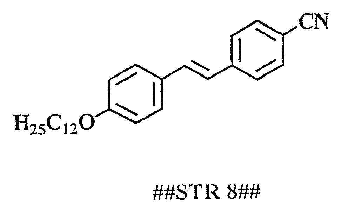

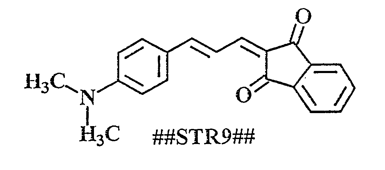

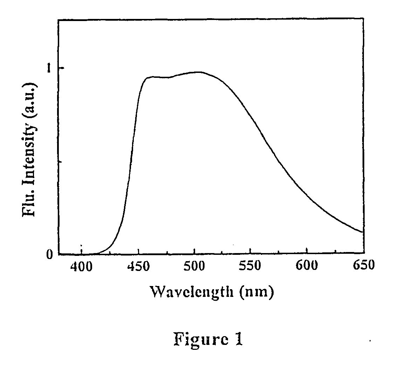

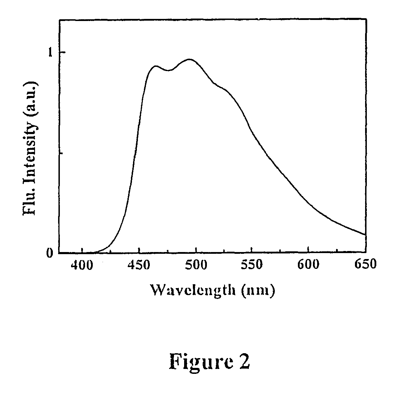

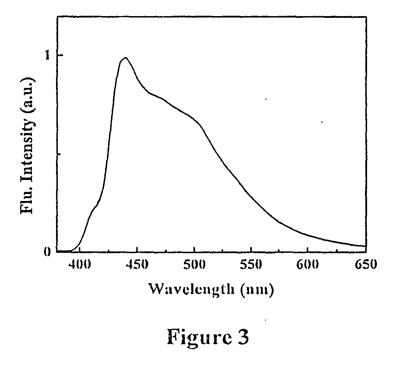

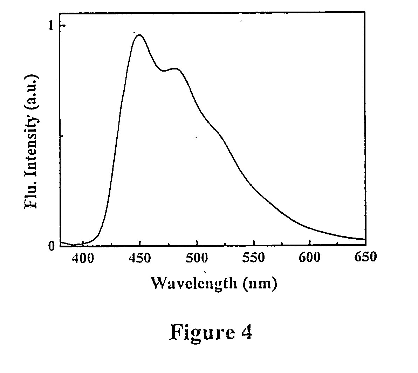

#STR1#, #STR2#, #STR3#, #STR4#, #STR5#, #STR6#, #STR7# and #STR8# exhibit strong solid state fluorescence. The solid state fluorescence of these compounds shows a dependence on the length of their alkyloxy chain. For example the short alkyloxy chain substituted compound #STR1# shows a strong green solid state fluorescence and the long alkyloxy chain substituted compound #STR4# show a strong blue fluorescence. Figures 1-4 show the solid slate fluorescence of #STR1#, #STR2#, #STR3#, #STR4#, respectively.

### Example 7:

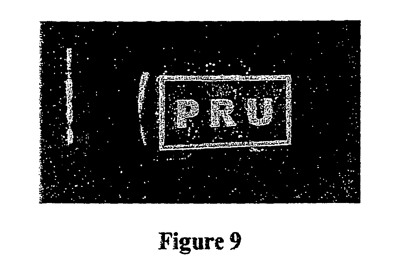

A fluorescent compound such as #STR1#, #STR2#, #STR3#, #STR4# or their mixtures were dispersed in a suitable polymer such as polymethylmethacrylate (PMMA) by dissolving the polymer and fluorescent material in a suitable solvent such as chloroform. The solvent was evaporated to obtain a viscous solution of the fluorescent compound dispersed in PMMA. The obtained viscous solution was spread on a substrate such as a glass slide either by spin casting or by uniformly applying over it. The solvent from the film was removed by leaving the coated glass slide in the open for about 3 hrs. A typical imaging sample cell consisted of a polymer Him coated glass slide above which the required photomask was placed. Pulsed laser (355 nm, third harmonic of Nd:YAG, 20 mJ, 10 ns pulse width) was used as the source of light for the "write" process (Figure 5). Laser light was flashed on the photomask for less than a minute. The optimum time was observed to be 15 seconds per cm². Under normal light, the image on the polymer film is not visible (Figures 6A and 7), The image or information inscribed on the polymer films become visible when they are exposed to low intensity ultraviolet light of wavelength 350 nm (Rayonct Photochemical Reactor Lamp, Cat. No. RPR 3500 Å) (Figures 6B and 8). The image obtained using a negative photomask is shown in Figure 9.

### Example 8:

A fluorescent compound such as #STR5#, #STR6#, #STR7#, #STR8# or their mixtures were dispersed in a suitable polymer such as polymethylmethacrylate (PMMA) by dissolving both the substances in a suitable solvent such as chloroform. The solvent was evaporated to obtain a viscous solution of the fluorescent compound dispersed in PMMA.. The obtained viscous solution was spread on a substrate such as a glass slide either by spin casting or by uniformly applying over it. The solvent from the film was removed by leaving the coated glass slide in the open for about 3 hrs. A typical imaging sample cell consisted of a polymer film coated glass slide above which the required photomask was placed. Pulsed laser (355 nm, third harmonic of Nd:YAG, 20 mJ, 10 ns pulse width) was used as the source of light for the "write" process Laser light was flashed on the photomask for less than a minute. The optimum time was observed to be 15 seconds per cm². The image or information inscribed on the polymer films become visible when they are exposed to low intensity ultraviolet light of wavelength 360 nm.

### Example 9:

A fluorescent compound such as #STR9# was dispersed in a suitable polymer such as polymethylmethacrylate (PMMA) by dissolving both the substances in a suitable solvent such as chloroform. The solvent was evaporated to obtain a viscous solution of the fluorescent compound dispersed in PMMA. The obtained viscous solution was spread on a substrate such as a glass slide either by spin casting or by uniformly applying over it. The solvent from the film was removed by leaving the coated glass slide in the open for about 3 hrs. A typical imaging sample cell consisted of a polymer film coated glass slide above which the required photomask was placed. Pulsed laser (355 nm, third harmonic of Nd:YAG, 20 mJ, 10 ns pulse width) was used as the source of light for the "write" process Laser light was flashed on the photomask for less than a minute. The optimum time was observed to be 15 seconds per cm². The image or information inscribed on the polymer films become visible when they are exposed to low intensity ultraviolet light of wavelength 360 nm. In this case the polymer film is already colored as a result of which the image inscribed on it becomes visible even in the absence of ultraviolet light.

### Mechanism of the fluorescence imaging process

The Nuclear Magnetic Resonance (NMR) analyses of these compounds show that their ground state configuration is EE (Figure 10). Study on the photophysical properties of these compounds in solution show that their EE form has an absorption maximum centered at 360 nm and an emission maximum centered at 450 nm (Blue fluorescence). Upon photolysis using radiation in the range 350 - 360 nm, the EE form was found to undergo thermally irreversible isomerization to yield their EZ and ZE forms. This process was found to occur until a photostationary state (PSS1) consisting of a mixture of *EZ* (50%), ZE (15%) and EE (35%) forms. The EZ and ZE forms of these compounds were isolated using HPLC techniques and were characterized using COSY and NOESY NMR analyses. Upon irradiation of this mixture (PSS1) using a high intensity radiation such as 355 nm laser (third harmonic of Nd:YAG 1064 nm laser) the reaction further proceeded causing a cleavage of the isomers to yield the corresponding benzaldehyde. Benzaldehyde formation was confirmed by isolating it using HPLC and characterizing it. Both photoisomers, EZ and ZE, as well as benzaldehyde are non fluorescent. The fluorescent properties of these compounds are similar in a polymer matrix such as in polymethylmethacrylate (PMMA). Upon photolysis of a blue fluorescent film of the *EE* form, initially the photoisomers are generated and on subsequent irradiation they undergo transformation to benzaldehyde causing non-fluorescent marks. The non-fluorescent marks on the fluorescent film are clearly visible when exposed to the low intensity UV radiation. The writing process is basically formation of non-fluorescent marks on a blue fluorescent film. A suitable photomask is placed between the photolysing light and the polymer film to obtain the required image. The absorption changes associated with these processes are depicted below.

### Advantages of the present invention:

The fluorescent polymer film based labeling materials described in this, invention possess good properties making them highly applicable as security and anti-counterfeit labels.
1. The fluorescence imaging or writing offered by these materials remains permanent, thermally irreversible and invisible under visible light. The invisible nature of the writing makes them applicable as secret coding materials.
2. The image created does not get erased or diminished in clarity even on long exposure to low intensity UV light used for the reading process.
3. The material being polymer based is Tree from attack by moisture and stays inert under normal conditions, making the preservation of processed films quite easy.
4. The writing process being possible only by using high intensity UV light makes the writing process expensive and difficult. This however becomes an advantage in view of its application as a medium for security coding. Expensive and sophisticated writing processes considerably reduce chances of duplicating the security labels. The reading process, by simply placing the labels under low intensity UV radiation, makes the detection and identification of the authenticity of a product very easy.
5. The film preparation procedure is very simple.
6. The image created on such polymer films cannot be altered or erased and any attempt to do so will only damage the label. This will make it impossible to duplicate these labels or products bearing them.
7. The 4-alkyloxy-4'cyano-1,4-diphcnylbuladiene derivatives form a new class of liquid crystalline materials and can find applications in most areas where liquid crystals are used such as display devices and optical switching.
8. These liquid crystals can be photochemically switched from their liquid crystalline to isotropic phase, isothermally in a reversible manner making them potentially useful in optical switching and pholoimaging devices.
9. These materials show strong solid state fluorescence making them potentially useful in development of organic light emitting diodes.

## Claims

1. An information carrying substrate applicable to a surface of a product for authenticating the product, said substrate comprising 50 to 99.999% by weight of a film forming material, 0.001 to 5% by weight of a photo-switchable fluorescent compound uniformly dispersed in said film forming material, the photo-switchable fluorescent compound possessing strong solid state fluorescence in the presence of UV light and having the general formula: 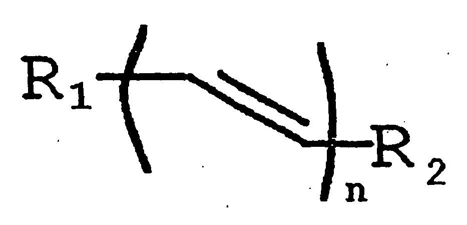 wherein R1 and R2 are substituted phenyl groups and n = 1 to 3, and wherein the photo-switchable fluorescent compound fluoresces reversibly at a wavelength in the range of 390 to 700 nm in the presence of ultraviolet light having amplitude below 0.5 mJ/pulse and is rendered substantially non-fluorescent in the presence of ultraviolet light upon irradiation by ultraviolet light having amplitude above 2 mJ/pulse **characterized in that** the photo-switchable fluorescent compound used is selected from the group consisting of 4-cyano, 4-methoxy-1,4-diphenylbutadiene; 4-cyano, 4-butyloxy-1,4-diphenylbutadiene; 4-cyano, 4-octyloxy -1,4-diphenylbutadiene; 4-cyano, 4-dodecyloxyl -1,4-diphenylbutadiene; 4-cyano, 4-methoxystilbene; 4-cyano, 4-butyloxystilbene; 4-cyano, 4-octyloxystilbene, 4-cyano, 4-dodecyloxystilbene and 2-[3-(4-N,N-dimethylaminophenyl)prop-2-enylidene]indane-1,3-dione.

2. An information carrying substrate as claimed in claim 1, wherein said photo-switchable fluorescent compound possess strong solid state fluorescence.

3. An information carrying substrate as claimed in claim 1, wherein said photo-switchable fluorescent compound is capable of being switched thermally and photo-chemically.

4. An information carrying substrate as claimed in claim 1, wherein the film forming material is selected from the group comprising of polymethylmethacrylate, polystyrene and polyvinylalcohol or mixtures thereof.

5. An information carrying substrate as claimed in claim 1, wherein the film forming material and the photo-switchable fluorescent compound are soluble in a solvent selected from the group consisting of acetone, chloroform, ethylacetate, dichloromethane and methanol.

6. An information carrying substrate as claimed in claim 1, wherein the substrate is applied on surfaces selected from the group comprising of metal, plastic, glass, polymer sheets or any other surface which is not damaged or is soluble in the solvent used.

7. An information carrying substrate as claimed in claim 1, wherein the information carrying substrate is non-fluorescent in ordinary light but turns fluorescence when kept under low intensity UV light source.

8. An information carrying substrate as claimed in claim 1, wherein the fluorescence of the substrate in low intensity UV radiation is irreversible switched OFF when the substrate is subjected to high intensity UV source.

9. An information carrying substrate as claimed in claim 1, wherein the information is recorded on the substrate by placing an information containing mask in front of the coated substrate and irradiating with a high intensity UV source.

10. An information carrying substrate as claimed in claim 8, wherein the UV light source emits light having amplitude above 2 mJ/Pulse.

11. A method for authenticating a product, said method comprising (a) applying an information carrying substrate on an upper or lower surface of the product, the information carrying substrate comprising 50 to 99.999% by weight of a film forming material, 0.001 to 5% by weight of a photo-switchable fluorescent compound uniformly dispersed in said film forming material, the photo-switchable fluorescent compound possessing strong solid state fluorescence in the presence of UV light and having the general formula: 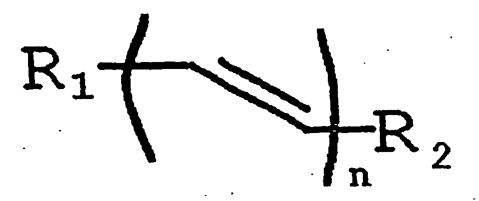 wherein R1 and R2 are substituted phenyl groups and n = 1 to 3, and wherein the photo-switchable fluorescent compound fluoresces reversibly at a wavelength in the range of 390 to 700 nm in the presence of ultraviolet light having amplitude below 0.5 mJ/Pulse and is rendered substantially non-fluorescent in the presence of ultraviolet light upon irradiation by ultraviolet light having amplitude above 2 mJ/Pulse wherein the photo-switchable fluorescent compound used are selected from the group consisting of 4-cyano, 4-methoxy-1,4-diphenylbutadiene; 4-cyano, 4-butyloxy-1,4-diphenylbutadiene; 4-cyano, 4-octyloxy-1,4-diphenylbutadiene; 4-cyano, 4-dodecyloxyl-1,4-diphenylbutadiene; 4-cyano, 4-methoxystilbene; 4-cyano, 4-butyloxystilbene; 4-cyano, 4-octyloxystilbene; 4-cyano, 4-dodecyloxystilbene and 2-[3-(4-N,N-dimethylaminophenyl)prop-2-enylidene]indane-1,3-dione, (b) drying the substrate and (c) writing an authenticating information upon the medium by conventional techniques that may be read by placing the information recording medium under ultraviolet light having amplitude below 0.5 mJ/pulse.

12. A method as claimed in claim 11, wherein said photo-switchable fluorescent compound possess strong solid state fluorescence.

13. A method as claimed in claim 11, wherein said photo-switchable fluorescent compound is capable of being switched thermally and photo-chemically.

14. A method as claimed in claim 11, wherein the film forming material is selected from the group comprising of polymethylmethacrylate, polystyrene and polyvinylalcohol or mixtures thereof.

15. A method as claimed in claim 11, wherein the film forming material and the photo-switchable fluorescent compound are soluble in a solvent selected from the group consisting of acetone, chloroform, ethylacetate, dichloromethane and methanol.

16. A method as claimed in claim 11, wherein the substrate is applied or surfaces selected from the group comprising of metal, plastic, glass, polymer sheets or any other surface which is not damaged or is soluble in the solvent used.

17. A method as claimed in claim 11, wherein the information carrying substrate is non-fluorescent in ordinary light but turns fluorescence when kept under low intensity UV light source.

18. A method as claimed in claim 11, wherein the fluorescence of the information carrying substrate in low intensity UV radiation is irreversible switched OFF when the substrate is subjected to high intensity UV source.

19. A method as claimed in claim 11, wherein the information is recorded on the substrate by placing an information containing mask in front of the substrate and irradiating with a high intensity UV source..

20. A method as claimed in claim 19, wherein the UV light source emits light having amplitude above 2 mJ/Pulse.

21. A method as claimed in claim 11, wherein the information written on the substrate is read by subjecting the information carrying medium to a UV light source having very low amplitude.

## Patentansprüche

1. Mit Informationen bestücktes Substrat, das zur Authentifizierung eines Produktes auf eine Oberfläche des Produktes aufgebracht werden kann, wobei das Substrat 50 bis 99,999 Gew.-% eines filmbildenden Materials, 0,001 bis 5 Gew.-% einer photoschaltbaren fluoreszierenden Verbindung, die gleichmäßig in dem filmbildenden Material dispergiert ist, umfasst, wobei die photoschaltbare fluoreszierende Verbindung starke Festkörperfluoreszenz in Gegenwart von UV-Licht besitzt und folgende allgemeine Formel aufweist: 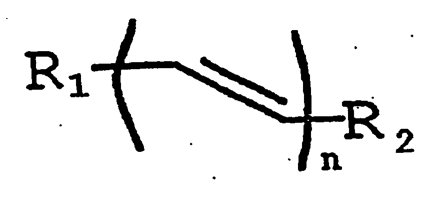 wobei R1 und R2 für substituierte Phenylgruppen stehen und n = 1 bis 3 ist und wobei die photoschaltbare fluoreszierende Verbindung reversibel bei einer Wellenlänge im Bereich von 390 bis 700 nm in der Gegenwart von ultraviolettem Licht mit einer Amplitude unter 0,5 mJ/Puls fluoresziert und in Gegenwart von ultraviolettem Licht bei Bestrahlung mit ultraviolettem Licht mit einer Amplitude über 2 mJ/Puls im Wesentlichen nicht-fluoreszierend wird, **dadurch gekennzeichnet, dass** die verwendete photoschaltbare fluoreszierende Verbindung aus der Gruppe ausgewählt ist, die aus 4-Cyano, 4-methoxy-1,4-diphenylbutadien; 4-Cyano, 4-butyloxy-1,4-dipheylbutadien; 4-Cyano, 4-octyloxy-1,4-diphenylbutadien; 4-Cyano, 4-dodecyloxy-1,4-diphenylbutadien; 4-Cyano, 4-methoxystilben; 4-Cyano, 4-butyloxystilben; 4-Cyano, 4-octyloxystilben; 4-Cyano, 4-dodecyloxystilben und 2-[3-(4-N,N-Dimethylaminophenyl)prop-2-enyliden]indan-1,3-dion besteht.

2. Mit Informationen bestücktes Substrat nach Anspruch 1, wobei die photoschaltbare fluoreszierende Verbindung starke Festkörperfluoreszenz besitzt.

3. Mit Informationen bestücktes Substrat nach Anspruch 1, wobei die photoschaltbare fluoreszierende Verbindung thermisch und photochemisch geschaltet werden kann.

4. Mit Informationen bestücktes Substrat nach Anspruch 1, wobei das filmbildende Material aus der Gruppe ausgewählt ist, die Polymethylmethacrylat, Polystyrol und Polyvinylalkohol oder Mischungen daraus umfasst.

5. Mit Informationen bestücktes Substrat nach Anspruch 1, wobei das filmbildende Material und die photoschaltbare fluoreszierende Verbindung in einem Lösemittel lösbar sind, das aus der Gruppe ausgewählt ist, die aus Aceton, Chloroform, Ethylacetat, Dichlormethan und Methanol besteht.

6. Mit Informationen bestücktes Substrat nach Anspruch 1, wobei das Substrat auf Oberflächen aufgebracht wird, die aus der Gruppe ausgewählt sind, die Metall, Kunststoff, Glas, Polymerfolien oder jede andere Oberfläche umfasst, die durch das verwendete Lösemittel nicht beschädigt wird bzw. nicht in diesem löslich ist.

7. Mit Informationen bestücktes Substrat nach Anspruch 1, wobei das mit Informationen bestückte Substrat in gewöhnlichem Licht nicht-fluoreszierend ist, jedoch fluoreszierend wird, wenn es unter eine UV-Lichtquelle niedriger Intensität gehalten wird.

8. Mit Informationen bestücktes Substrat nach Anspruch 1, wobei die Fluoreszenz des Substrates unter UV-Strahlung geringer Intensität irreversibel abgeschaltet wird, wenn das Substrat einer Quelle für UV-Licht mit hoher Intensität ausgesetzt wird.

9. Mit Informationen bestücktes Substrat nach Anspruch 1, wobei die Information auf dem Substrat aufgezeichnet wird, indem eine die Information enthaltende Maske vor dem beschichteten Substrat angeordnet wird und mit einer Quelle für UV-Licht hoher Intensität bestrahlt wird.

10. Mit Informationen bestücktes Substrat nach Anspruch 8, wobei die UV-Lichtquelle Licht mit einer Amplitude von über 2 mJ/Puls abgibt.

11. Verfahren zur Authentifizierung eines Produktes, wobei das Verfahren folgendes umfasst: (a) das Aufbringen eines mit Informationen bestückten Substrates auf eine Ober- oder Unterseite des Produktes, wobei das mit Informationen bestückte Substrat 50 bis 99,999 Gew.-% eines filmbildenden Materials, 0,001 bis 5 Gew.-% einer photoschaltbaren fluoreszierenden Verbindung, die gleichmäßig in dem filmbildenden Material dispergiert ist, umfasst, wobei die photoschaltbare fluoreszierende Verbindung starke Festkörperfluoreszenz in Gegenwart von UV-Licht besitzt und folgende allgemeine Formel aufweist: 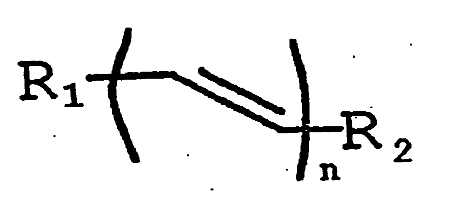 wobei R1 und R2 für substituierte Phenylgruppen stehen und n = 1 bis 3 ist und wobei die photoschaltbare fluoreszierende Verbindung reversibel bei einer Wellenlänge im Bereich von 390 bis 700 nm in der Gegenwart von ultraviolettem Licht mit einer Amplitude unter 0,5 mJ/Puls fluoresziert und in Gegenwart von ultraviolettem Licht bei Bestrahlung mit ultraviolettem Licht mit einer Amplitude über 2 mJ/Puls im Wesentlichen nicht-fluoreszierend wird, wobei die verwendete photoschaltbare fluoreszierende Verbindung aus der Gruppe ausgewählt ist, die aus 4-Cyano, 4-methoxy-1,4-diphenylbutadien; 4-Cyano, 4-butyloxy-1,4-dipheylbutadien; 4-Cyano, 4-octyloxy-1,4-diphenylbutadien; 4-Cyano, 4-dodecyloxy-1,4-diphenylbutadien; 4-Cyano, 4-methoxystilben; 4-Cyano, 4-butyloxystilben; 4-Cyano, 4-octyloxystilben; 4-Cyano, 4-dodecyloxystilben und 2-[3-(4-N,N-Dimethylaminophenyl)prop-2-enyliden]indan-1,3-dion besteht, (b) das Trocknen des Substrates und (c) das Schreiben einer authentifizierenden Information auf das Medium mit Hilfe herkömmlicher Techniken, die gelesen werden kann, indem das Informationsaufzeichnungsmedium unter ultraviolettem Licht mit einer Amplitude unter 0,5 mJ/Puls angeordnet wird.

12. Verfahren nach Anspruch 11, wobei die photoschaltbare fluoreszierende Verbindung starke Festkörperfluoreszenz besitzt.

13. Verfahren nach Anspruch 11, wobei die photoschaltbare fluoreszierende Verbindung thermisch und photochemisch geschaltet werden kann.

14. Verfahren nach Anspruch 11, wobei das filmbildende Material aus der Gruppe ausgewählt ist, die Polymethylmethacrylat, Polystyrol und Polyvinylalkohol oder Mischungen daraus umfasst.

15. Verfahren nach Anspruch 11, wobei das filmbildende Material und die photoschaltbare fluoreszierende Verbindung in einem Lösemittel lösbar sind, das aus der Gruppe ausgewählt ist, die aus Aceton, Chloroform, Ethylacetat, Dichlormethan und Methanol besteht.

16. Verfahren nach Anspruch 11, wobei das Substrat auf Oberflächen aufgebracht wird, die aus der Gruppe ausgewählt sind, die Metall, Kunststoff, Glas, Polymerfolien oder jede andere Oberfläche umfasst, die durch das verwendete Lösemittel nicht beschädigt wird bzw. nicht in diesem löslich ist.

17. Verfahren nach Anspruch 11, wobei das mit Informationen bestückte Substrat in gewöhnlichem Licht nicht-fluoreszierend ist, jedoch fluoreszierend wird, wenn es unter eine UV-Lichtquelle niedriger Intensität gehalten wird.

18. Verfahren nach Anspruch 11, wobei die Fluoreszenz des mit Informationen bestückten Substrates unter UV-Strahlung geringer Intensität irreversibel abgeschaltet wird, wenn das Substrat einer Quelle für UV-Licht mit hoher Intensität ausgesetzt wird.

19. Verfahren nach Anspruch 11, wobei die Information auf dem Substrat aufgezeichnet wird, indem eine die Information enthaltende Maske vor dem Substrat angeordnet wird und mit einer Quelle für UV-Licht hoher Intensität bestrahlt wird.

20. Verfahren nach Anspruch 19, wobei die UV-Lichtquelle Licht mit einer Amplitude von über 2 mJ/Puls abgibt.

21. Verfahren nach Anspruch 11, wobei die Information, die auf das Substrat geschrieben ist, gelesen wird, indem das mit Informationen bestückte Medium einer UV-Lichtquelle mit sehr geringer Amplitude unterzogen wird.

## Revendications

1. Substrat porteur d'informations, pouvant être appliqué sur une surface d'un produit pour authentifier le produit, ledit substrat comprenant 50 à 99,999 % en poids d'un matériau filmogène, 0,001 à 5 % en poids d'un composé fluorescent photocommutable uniformément dispersé dans ledit matériau filmogène, le composé fluorescent photocommutable présentant une intense fluorescence à l'état solide en présence d'une lumière UV et ayant la formule générale : 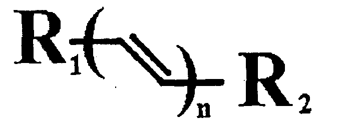 dans laquelle R₁ et R₂ sont des groupes phényle substitués, et n = 1 à 3, et où le composé fluorescent photocommutable présente une fluorescence réversible à une longueur d'onde comprise dans la plage de 390 à 700 nm en présence d'une lumière ultraviolette ayant une amplitude inférieure à 0,5 mJ/impulsion, et est rendu pour ainsi dire non fluorescent en présence d'une lumière ultraviolette lors d'une irradiation par une lumière ultraviolette ayant une amplitude supérieure à 2 mJ/impulsion, **caractérisé en ce que** le composé fluorescent photocommutable utilisé est choisi dans l'ensemble consistant en le 4-cyano,4-méthoxy-1,4-diphénylbutadiène ; le 4-cyano,4-butyloxy-1,4-diphénylbutadiène ; le 4-cyano,4-octyloxy-1,4-diphénylbutadiène ; le 4-cyano,4-dodécyloxyl-1,4-diphénylbutadiène ; le 4-cyano,4-méthoxystilbène ; le 4-cyano,4-butyloxystilbène ; le 4-cyano,4-octyloxystilbène ; le 4-cyano,4-dodécyloxystilbène et la 2-[3-(4-N,N-diméthylaminophényl)prop-2-énylidène]indane-1,3-dione.

2. Substrat porteur d'informations selon la revendication 1, dans lequel ledit composé fluorescent photocommutable présente une intense fluorescence à l'état solide.

3. Substrat porteur d'informations selon la revendication 1, dans lequel ledit composé fluorescent photocommutable peut subir une commutation thermique et photochimique.

4. Substrat porteur d'informations selon la revendication 1, dans lequel le matériau filmogène est choisi dans l'ensemble consistant en le poly(méthacrylate de méthyle), le polystyrène et le poly(alcool vinylique) ou les mélanges de ceux-ci.

5. Substrat porteur d'informations selon la revendication 1, dans lequel le matériau filmogène et le composé fluorescent photocommutable sont solubles dans un solvant choisi dans l'ensemble consistant en l'acétone, le chloroforme, l'acétate d'éthyle, le dichlorométhane et le méthanol.

6. Substrat porteur d'informations selon la revendication 1, dans lequel le substrat est appliqué sur des surfaces choisies dans l'ensemble comprenant les métaux, les matières plastiques, le verre, les feuilles polymères, ou toute autre surface qui n'est pas endommagée ou est soluble dans le solvant utilisé.

7. Substrat porteur d'informations selon la revendication 1, dans lequel le substrat porteur d'informations est non fluorescent sous une lumière ordinaire, mais devient fluorescent quand il est maintenu sous une source de lumière UV de faible intensité.

8. Substrat porteur d'informations selon la revendication 1, dans lequel la fluorescence du substrat sous un rayonnement UV de faible intensité est désactivée de manière irréversible quand le substrat est soumis à une source UV de haute intensité.

9. Substrat porteur d'informations selon la revendication 1, dans lequel les informations sont enregistrées sur le substrat par mise en place d'un masque contenant des informations devant le substrat revêtu, et irradiation avec une source UV de haute intensité.

10. Substrat porteur d'informations selon la revendication 8, dans lequel la source de lumière UV émet une lumière ayant une amplitude supérieure à 2 mJ/impulsion.

11. Procédé pour authentifier un produit, ledit procédé comprenant (a) l'application d'un substrat porteur d'informations sur une surface supérieure ou inférieure du produit, ledit substrat porteur d'informations comprenant 50 à 99,999 % en poids d'un matériau filmogène, 0,001 à 5 % en poids d'un composé fluorescent photocommutable uniformément dispersé dans ledit matériau filmogène, le composé fluorescent photocommutable présentant une intense fluorescence à l'état solide en présence d'une lumière UV et ayant la formule générale : 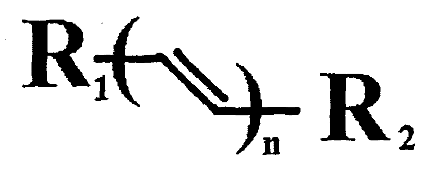 dans laquelle R₁ et R₂ sont des groupes phényle substitués, et n = 1 à 3, et où le composé fluorescent photocommutable présente une fluorescence réversible à une longueur d'onde comprise dans la plage de 390 à 700 nm en présence d'une lumière ultraviolette ayant une amplitude inférieure à 0,5 mJ/impulsion, et est rendu pour ainsi dire non fluorescent en présence d'une lumière ultraviolette lors d'une irradiation par une lumière ultraviolette ayant une amplitude supérieure à 2 mJ/impulsion, le composé fluorescent photocommutable utilisé étant choisi dans l'ensemble consistant en le 4-cyano,4-méthoxy-1,4-diphénylbutadiène ; le 4-cyano,4-butyloxy-1,4-diphényl butadiène ; le 4-cyano,4-octyloxy-1,4-diphényl butadiène ; le 4-cyano,4-dodécyloxyl-1,4-diphényl butadiène ; le 4-cyano,4-méthoxystilbène ; le 4-cyano,4-butyloxystilbène ; le 4-cyano,4-octyloxystilbène ; le 4-cyano,4-dodécyloxystilbène et la 2-[3-(4-N,N-diméthylaminophényl)prop-2-énylidène]indane-1,3-dione, (b) le séchage du substrat, et (c) l'écriture d'une information d'authentification sur le support par des techniques classiques, qui peut être lue par mise en place du support d'enregistrement d'informations sous une lumière ultraviolette ayant une amplitude inférieure à 0,5 mJ/impulsion.

12. Procédé selon la revendication 11, dans lequel ledit composé fluorescent photocommutable présente une intense fluorescence à l'état solide.

13. Procédé selon la revendication 11, dans lequel ledit composé fluorescent photocommutable peut subir une commutation thermique et photochimique.

14. Procédé selon la revendication 11, dans lequel le matériau filmogène est choisi dans l'ensemble consistant en le poly(méthacrylate de méthyle), le polystyrène et le poly(alcool vinylique) ou les mélanges de ceux-ci.

15. Procédé selon la revendication 11, dans lequel le matériau filmogène et le composé fluorescent photocommutable sont solubles dans un solvant choisi dans l'ensemble consistant en l'acétone, le chloroforme, l'acétate d'éthyle, le dichlorométhane et le méthanol.

16. Procédé selon la revendication 11, dans lequel le substrat est appliqué sur des surfaces choisies dans l'ensemble comprenant les métaux, les matières plastiques, le verre, les feuilles polymères, ou toute autre surface qui n'est pas endommagée ou est soluble dans le solvant utilisé.

17. Procédé selon la revendication 11, dans lequel le substrat porteur d'informations est non fluorescent sous une lumière ordinaire, mais devient fluorescent quand il est maintenu sous une source de lumière UV de faible intensité.

18. Procédé selon la revendication 11, dans lequel la fluorescence du substrat porteur d'informations sous un rayonnement UV de faible intensité est désactivée de manière irréversible quand le substrat est soumis à une source UV de haute intensité.

19. Procédé selon la revendication 11, dans lequel les informations sont enregistrées sur le substrat par mise en place d'un masque contenant des informations devant le substrat revêtu, et irradiation avec une source UV de haute intensité.

20. Procédé selon la revendication 19, dans lequel la source de lumière UV émet une lumière ayant une amplitude supérieure à 2 mJ/impulsion.

21. Procédé selon la revendication 11 dans lequel les informations écrites sur le substrat sont lues par exposition du support porteur d'informations à une source de lumière UV ayant une très faible amplitude.
